# EUROPÄISCHE PATENTANMELDUNG

(11) **EP 4 079 694 A1**
(43) Veröffentlichungstag der Anmeldung: **26.10.2022**
(21) Anmeldenummer: 22154236.8
(22) Anmeldetag: 31.01.2022
(51) Int. Cl.: C02F 11/10, C02F 11/06, F23G 5/46, F23G 5/20, F23G 5/00, F23G 5/027

(54) **VORRICHTUNG UND VERFAHREN ZUR THERMISCHEN BEHANDLUNG EINES ORGANISCHEN ABFALLSTOFFES**

(30) Priorität: 20.04.2021 DE 102021203903
(71) Anmelder: IBU-tec advanced materials AG, 99425 Weimar (DE)
(72) Erfinder: SCHLOSSER, Arndt, 84533 Stammham (DE); WOCADLO, Thomas, 44267 Dortmund (DE); VOGEL, Steffen, 99425 Weimar (DE); RAMMELT, Thomas, 99423 Weimar (DE); STUMPF, Andreas, 99867 Gotha (DE); KÖHLER, Leonhard, 99425 Weimar (DE)
(74) Vertreter: Liedtke & Partner Patentanwälte

(57) **Zusammenfassung**

Die Erfindung betrifft ein Verfahren und eine Vorrichtung (1, 100) zur mehrfachen thermischen Behandlung eines organischen Abfallstoffes (KS), insbesondere von Klärschlamm, Schlammwasser, Klärschlammasche oder Asphalt, in einem ersten Drehrohrofen (2) und einem nachfolgenden zweiten Drehrohrofen (3). Das Verfahren umfasst zumindest folgende Schritte:
- Zuführen des organischen Abfallstoffes (KS, vKS) in den ersten Drehrohrofen (2),
- erste thermische Behandlung des zugeführten organischen Abfallstoffes (KS, vKS) in dem ersten Drehrohrofen (2),
- Zuführen des im ersten Drehrohrofen (2) thermisch behandelten Abfallstoffes (KS') in den zweiten Drehrohrofen (3),
- zweite thermische Behandlung des thermisch behandelten Abfallstoffes (KS') im zweiten Drehrohrofen (3) mittels zumindest eines Teils eines bei der thermischen Behandlung in dem ersten Drehrohrofen (2) entstehenden Brüdens (B, B'), und
- Abführen einer dabei gewonnenen Asche (A) oder Schlacke oder eines Rest- oder Wertstoffs aus dem zweiten Drehrohrofen (3).

## Beschreibung

Die Erfindung betrifft eine Vorrichtung und ein Verfahren zur thermischen Behandlung eines organischen Abfallstoffes, insbesondere eines Rohschlamms, Klärschlamms, von Schlammwasser oder von Klärschlammasche oder von Asphalt, in einer thermischen Anlage.

Da der Klärschlamm aufgrund von gesetzlichen Vorgaben nur schwer auf landwirtschaftlichen Flächen ausgebracht werden darf, sind verschiedene Verfahren zur Behandlung von Klärschlamm bekannt:
Bei einer thermischen Behandlung in einem Drehrohrofen können durch Zugabe von Alkalimetall-Chloriden zum Klärschlamm die enthaltenen Schwermetalle als Schwermetallchloride aus dem Klärschlamm verdampft und in die Gasphase überführt werden. Phosphor verbleibt dabei im Klärschlamm und kann als Dünger verwendet werden, wie dies beispielsweise aus EP 2 411 339 B1 bekannt ist.

Aus EP 0 544 876 B1 ist ein Verfahren zur kombinierten Klärschlamm- und Müllverbrennung bekannt, bei welchem der verbrannte Klärschlamm in Form von Schlacken deponiert oder weiteren Verwendungszwecken zugeführt wird.

Der Erfindung liegt die Aufgabe zu Grunde, eine besonders umweltschonendes, insbesondere energie- und emissionsoptimiertes, Vorrichtung und ein Verfahren zur thermischen Behandlung eines organischen Abfallstoffes anzugeben.

Die Aufgabe hinsichtlich der Vorrichtung wird erfindungsgemäß gelöst durch die Merkmale des Patentanspruchs 1. Die Aufgabe hinsichtlich des Verfahrens wird erfindungsgemäß gelöst durch die Merkmale des Patentanspruchs 14.

Vorteilhafte Ausgestaltungen der Erfindung sind Gegenstand der Unteransprüche.

Das erfindungsgemäße Verfahren zur mehrfachen thermischen Behandlung eines organischen Abfallstoffes, insbesondere von Klärschlamm, Schlammwasser, Klärschlammasche oder Asphalt, in einem ersten Drehrohrofen und einem nachfolgenden zweiten Drehrohrofen, umfasst zumindest folgende Schritte:
- Zuführen des organischen Abfallstoffes in den ersten Drehrohrofen,
- erste thermische Behandlung des zugeführten organischen Abfallstoffes in dem ersten Drehrohrofen,
- Zuführen des im ersten Drehrohrofen thermisch behandelten organischen Abfallstoffes in den zweiten Drehrohrofen,
- zweite thermische Behandlung des bereits im ersten Drehrohrofen thermisch behandelten Abfallstoffes im zweiten Drehrohrofen, und
- Abführen einer dabei gewonnenen Asche oder Schlacke oder eines Rest- oder Wertstoffs aus dem zweiten Drehrohrofen.

Die mit der Erfindung erzielten Vorteile bestehen insbesondere darin, dass durch eine mehrfache, insbesondere zweistufige thermische Behandlung eines organischen Abfallstoffes, insbesondere von Rohschlamm, Klärschlamm, Schlammwasser und insbesondere ohne separate Vorbehandlung, wie Vorentwässerung, in zwei separaten Drehrohröfen eine Asche mit einem deutlich reduzierten Organikgehalt erhalten wird, wobei gesetzliche Vorgaben zur Aschequalität eingehalten werden. Der organische Abfallstoff als Rohabfallstoff, wie zum Beispiel Rohschlamm oder Klärschlamm, wird nicht vorbehandelt. Mit anderen Worten: Der organische Abfallstoff wird unbehandelt, insbesondere ohne eine Vorentwässerung dem ersten Drehrohrofen zugeführt.

Eine Ausführungsform sieht vor, dass der organische Abfallstoff oder ein vorgetrockneter Abfallstoff im ersten Drehrohrofen während der ersten thermischen Behandlung, insbesondere in einer ersten thermischen Stufe, zum Beispiel einer kombinierten Reduktions- und Oxidationsstufe, getrocknet oder restgetrocknet und pyrolysiert wird. Diese erste thermische Stufe erfolgt ohne Sauerstoffzufuhrt. Dabei wird der organische Abfallstoff in der ersten thermischen Stufe im ersten Drehrohrofen in einem Temperaturbereich von 100°C bis 1.500°C, bevorzugt bis 1.000°C (Arbeits-/Betriebstemperaturbereich des ersten Drehrohrofens) thermisch behandelt. Optional kann bereits in der ersten thermischen Stufe der organische Abfallstoff oder ein vorgetrockneter Abfallstoff teilweise verbrannt werden.

Gemäß einer weiteren Ausführungsform wird der organische Abfallstoff oder ein vorgetrockneter Abfallstoff am Eintritt zum ersten Drehrohrofen mit einer Temperatur, die in etwa der Umgebungstemperatur entspricht, in den Drehrohrofen aufgegeben. Mit anderen Worten: Der organische Abfallstoff wird oder ist nicht thermisch vorbehandelt. Optional kann der organische Abfallstoff vorgetrocknet sein. Beispielsweise wird der organische Abfallstoff oder ein vorgetrockneter Abfallstoff im Frühjahr mit einer Materialtemperatur von 15°C oder im Sommer mit einer Materialtemperatur von 25°C in den Drehrohrofen aufgegeben. Der Drehrohrofen kann darüber hinaus entsprechend so gesteuert und/oder geregelt werden, dass der thermisch behandelte Abfallstoff am Austritt des ersten Drehrohrofens eine Materialtemperatur von 900°C bis 1.000°C aufweist. Dabei wird der organische Abfallstoff insbesondere unbehandelt, insbesondere ein Rohschlamm, Klärschlamm oder ein Schlammwasser oder ein Asphalt, unter definierter Gasatmosphäre reduzierend im Drehrohrofen getrocknet, pyrolysiert und teilweise verbrannt. Alternativ kann auch ein bereits vorentwässerter oder vorgetrockneter organischer Abfallstoff dem Drehrohrofen zugeführt werden.

Eine Weiterbildung sieht zum Vortrocknen des organischen Abfallstoffes einen Trockner vor. Der Trockner ist bevorzugt mittels zumindest eines Teils eines bei der thermischen Behandlung in dem ersten Drehrohrofen entstehenden Pyrolysegases beheizbar.

Die aus dieser ersten thermischen Behandlung resultierenden heißen, mit Wasserdampf und Pyrolysegas angereicherten, schadstoffbelasteten Abgase, die sogenannten Brüden, können dabei vorteilhafterweise als Heizgas für den zweiten Drehrohrofen verwendet und somit der thermischen Behandlung wieder zugeführt werden. Der Brüden kann beispielsweise im Gegenstrom zum Abfallstoffstrom im zweiten Drehrohrofen zugeführt werden. Alternativ kann der Brüden im Gleichstrom zum Abfallstoffstrom im zweiten Drehrohrofen geführt werden. Eine solche Nutzung des Brüdens als Heizgas für den zweiten Drehrohrofen stellt ein energieoptimiertes, prozessoptimiertes sowie abfalloptimiertes Verfahren dar.

Aus dieser ersten thermischen Behandlung des organischen Abfallstoffs oder des vorgetrockneten organischen Abfallstoffs resultierende Zwischenprodukte, wie zum Beispiel ein organischer Restabfallstoff und/oder nährstoffhaltige Abfallstoffasche oder Abfallstoffkoks, werden dem zweiten Drehrohrofen als thermisch behandelter Klärschlamm oder Asphalt zur zweiten thermischen Behandlung, insbesondere zur Oxidation und Verbrennung, insbesondere Nachverbrennung, zugeführt. Die zweite thermische Behandlung ist eine Oxidationsstufe, in welcher der thermisch behandelte Abfallstoff, wie zum Beispiel der thermisch behandelte Klärschlamm, unter Luftzuführung, insbesondere Verbrennungsluftzuführung, zu Asche verbrannt wird. Dabei wird der thermisch behandelte Abfallstoff im zweiten Drehrohrofen während der zweiten thermischen Behandlung derart nachverbrannt, dass die gewonnene Asche, insbesondere eine Restasche, wie eine Klärschlammasche, einen Gesamtkohlenstoffanteil von maximal drei Masse-% aufweist. Die Kopplung von Drehrohröfen zur mehrfachen thermischen Behandlung eines organischen Abfallstoffes, wie Klärschlamm, ist besonders vorteilhaft, da Asche mit einem besonders geringen Kohlenstoffanteil gewonnen werden kann. Darüber hinaus ermöglicht eine solche Kopplung, dass jede thermische Behandlungsstufe individuell, insbesondere energie-, abfall- und/oder emissionsoptimiert, eingestellt, gesteuert und/oder geregelt werden kann.

Eine weitere Ausführungsform sieht vor, dass der während der ersten thermischen Behandlung entstehende Brüden, insbesondere bereits innerhalb des ersten Drehrohrofens in der Trocknungszone, oder das entstehende Pyrolysegas aus dem ersten Drehrohrofen abgeführt, insbesondere abgesaugt, und dem zweiten Drehrohrofen als Heizgas zugeführt wird. Ein aus der Trocknungszone des ersten Drehrohrofens abgeführter, insbesondere abgesaugter Brüden oder das Pyrolysegas weist deutlich weniger Wasserdampf und einen signifikant höheren Heizwert auf. Somit eignet sich dieser aus der Trocknungszone des ersten Drehrohrofens entnommene Brüden oder das Pyrolysegas besonders als Heizgas mit hohem Heizwert zur Beheizung des zweiten Drehrohrofens und/oder des Trockners, so dass dieser weniger oder keine zusätzliche Fremdenergie, wie zum Beispiel Brennstoff, benötigt. Dabei wird der Brüden oder das Pyrolysegas in den zweiten Drehrohrofen beispielsweise eingedüst und dort nachverbrannt. Alternativ oder zusätzlich kann ein aus dem ersten Drehrohrofen austretender Brüden oder ein Pyrolysegas direkt, d.h. ohne Sondenabsaugung, dem zweiten Drehrohrofen zugeführt werden.

Eine Weiterbildung sieht vor, dass zur Heizung des Trockners mit Heizgas aus dem Brüden oder dem Pyrolysegas eine Brennkammer zur Verbrennung zumindest eines der Teile des bei der thermischen Behandlung in dem ersten Drehrohrofen entstehenden Brüdens oder Pyrolysegases vorgesehen ist. Beispielsweise ist der zumindest eine Teil des Brüdens oder des Pyrolysegases des ersten Drehrohrofens direkt der Brennkammer zuführbar. Zusätzlich ist eine Steuereinheit vorgesehen und derart eingerichtet, dass der zumindest eine Teil des Brüdens oder des Pyrolysegases in der Brennkammer bei mindestens 850°C verbrennt. Die Energie des in der Brennkammer erzeugten Rauchgases wird zur Vortrocknung des organischen Abfallstoffes, insbesondere des Klärschlammes, des Schlammwassers, der Klärschlammasche oder des Asphalts, im Trockner verwendet. Eine Zuführung von zusätzlichem Brennstoff ist bei normalen Bedingungen nicht erforderlich, nur bei sehr hohen Wassergehalten ist eine Zufeuerung von Brennstoff im Heißgaserzeuger oder in der Brennkammer nötig.

Zur Beheizung des zweiten Drehrohrofens kann dem zweiten Drehrohrofen zusätzlich oder alternativ ein Rauchgas, zum Beispiel ein Abgas einer Drittanlage, wie einer Müllverbrennungsanlage, und/oder ein Brennstoff zugeführt werden. Darüber hinaus kann ein aus dem zweiten Drehrohrofen ausströmendes Abgas zur Beheizung des ersten Drehrohrofens verwendet werden. Zusätzlich oder alternativ kann ein Heißgaserzeuger, insbesondere zur Inbetriebnahme der Vorrichtung, zur Erzeugung eines Heißgasstroms für zumindest eine zeitweise Beheizung des zweiten Drehrohrofens vorgesehen sein. Dabei kann zumindest ein Teil des in dem ersten Drehrohrofen entstehenden Brüdens direkt dem Heißgaserzeuger zugeführt werden. Zusätzlich kann dem Heißgaserzeuger während eines Anfahrvorgangs der Vorrichtung Brennstoff zugeführt werden. Diese verschiedenen Ausführungsformen ermöglichen ein besonders umweltschonendes, insbesondere variabel energieoptimiertes Verfahren. Ferner kann dem zweiten Drehrohrofen und/oder dem Heißgaserzeuger Verbrennungsluft, wie Umgebungsluft, oder ein anderes Hilfsgas zur Verbrennung mit dem Brennstoff zugeführt werden.

Eine weitere, vorteilhafte Ausführungsform sieht vor, dass zwischen der ersten thermischen Behandlung und der zweiten thermischen Behandlung eine Analyse, insbesondere eine Material- und/oder Gas-, zum Beispiel eine Abgasanalyse, des aus dem ersten Drehrohrofen ausströmenden Brüdenstroms und/oder Brüdens und/oder des Pyrolysegases und/oder des aus dem zweiten Drehrohrofen ausströmenden Abgases und/oder eine Materialanalyse des aus dem ersten Drehrohrofen abgeführten thermisch behandelten Abfallstoffes durchgeführt wird. Dabei wird oder werden anhand mindestens eines mittels der Analyse ermittelten Parameters, wie zum Beispiel einer Abgaszusammensetzung, eines Abgasmassenstroms, einer Abgastemperatur, einer Stoffkonzentration, insbesondere einer Sauerstoff-Konzentration, einer Materialtemperatur des organischen Abfallstoffs am Ein- und/oder Austritt zum jeweiligen Drehrohrofen, ein oder mehrere Arbeitsparameter der ersten thermischen Behandlung im ersten Drehrohrofen und/oder der zweiten thermischen Behandlung im zweiten Drehrohrofen eingestellt, gesteuert und/oder geregelt. Beispielsweise kann bei zu niedriger Abgastemperatur am Austritt des zweiten Drehrohrofens zumindest die Brennstoffzufuhr und/oder Verbrennungsluftzufuhr und optional die Brüdenstromzufuhr und/oder Brüdenzufuhr und/oder Pyrolysegaszufuhr erhöht werden oder bei zu hoher Sauerstoffkonzentration im Abgas des zweiten Drehrohrofens der Heißgas-, Brennstoffmassenstrom und/oder Verbrennungsluftmassenstrom verringert werden, damit z.B. die reduzierenden Bedingungen im ersten Drehrohrofen aufrechterhalten werden können. Auch kann es infolge einer zu hohen Sauerstoffkonzentration im Abgas des jeweiligen Drehrohrofens, zum Beispiel des ersten Drehrohrofens, zu einem Verschieben der thermischen Behandlungszonen im betreffenden Drehrohrofen kommen, so dass sich beispielsweise die Verbrennungszone auf Kosten der Pyrolysezone vergrößert oder im Extremfall keine Pyrolyse im ersten Drehrohrofen mehr stattfindet. Daher wird insbesondere die Sauerstoffkonzentration im Abgas des jeweiligen Drehrohrofens erfasst und überwacht und zur Einstellung der thermischen Behandlungszonen in dem jeweiligen Drehrohrofen verwendet. Hierdurch ist eine unerwünschte Verschiebung der thermischen Behandlungszonen zumindest reduziert oder gar vermieden. Zudem kann mittels der individuellen Einstellung der thermischen Behandlungszonen im jeweiligen Drehrohrofen anhand der erfassten physikalischen Größen und/oder Arbeitsparameter die thermische Behandlung optimiert werden.

Alternativ oder zusätzlich kann die Materialtemperatur des aufgegebenen, noch unbehandelten organischen Abfallstoffes und/oder des thermisch behandelten Abfallstoffes erfasst und überwacht werden sowie zur Einstellung der thermischen Behandlungszonen in dem jeweiligen Drehrohrofen verwendet werden. Beispielsweise kann bei einer zu niedrigen Materialtemperatur des thermisch behandelten Abfallstoffes am Austritt aus dem betreffenden Drehrohrofen der Heißgas-, Brennstoff- und/oder Verbrennungsluftmassenstrom in diesem Drehrohrofen erhöht werden.

Außerdem wird oder werden als Arbeitsparameter die Drehzahl, eines der oder beider Drehrohröfen und damit Verweildauer und/oder Füllgrad im jeweiligen Drehrohrofen, eine Heiztemperatur, ein Massenstrom an Fremdenergie, wie Rauchgaszufuhr, Brennstoffzufuhr, Brüdenzufuhr, Pyrolysegaszufuhr, Verbrennungsluftmassenstrom, Arbeitstemperatur im jeweiligen Drehrohrofen, Abfallstoffmassenstrom, Abgasmassenstrom, eingestellt, gesteuert und/oder geregelt. Zusätzlich oder alternativ können weitere Eingangsparameter, zum Beispiel Feuchte des zugeführten organischen Abfallstoffes, organischer Anteil (auch kurz TOC-Wert (englisch: Total Organic Carbon) genannt) des oder der Zwischenprodukts/e, erfasst und bei der Steuerung der mehrstufigen thermischen Behandlung berücksichtigt werden. Hierdurch kann die mehrstufige thermische Behandlung auf sich ändernde Eigenschaften des eingangs zugeführten, insbesondere unbehandelten Abfallstoffes, wie zum Beispiel Roh- oder Klärschlamm, entsprechend eingestellt, gesteuert und/oder geregelt werden.

Eine weitere erfindungsgemäße Vorrichtung zur mehrfachen thermischen Behandlung eines organischen Abfallstoffes, insbesondere von Klärschlamm, Schlammwasser, Klärschlammasche oder Asphalt, umfasst zumindest einen ersten Drehrohrofen und einen nachfolgenden zweiten Drehrohrofen, wobei
- der erste Drehrohrofen zumindest einen Materialeinlass zum Zuführen des organischen Abfallstoffes, ein beheizbares Rohr zur ersten thermischen Behandlung des zugeführten organischen Abfallstoffes zumindest in einer ersten thermischen Stufe und zumindest einen Materialauslass zum Abführen des thermisch behandelten Abfallstoffes, insbesondere eines oder mehrerer Zwischenprodukts/e, umfasst, und
- der zweite Drehrohrofen zumindest einen Materialeinlass zum Zuführen des aus dem Materialauslass des ersten Drehrohrofens abgeführten thermisch behandelten Abfallstoffes, ein beheizbares Rohr zur zweiten thermischen Behandlung des zugeführten und bereits im ersten Drehrohrofen thermisch behandelten Abfallstoffes in einer zweiten thermischen Stufe und mindestens einen Materialauslass zum Abführen einer aus der mehrfachen thermischen Behandlung des Abfallstoffes gewonnenen Asche oder Schlacke oder eines Rest- oder Wertstoffs umfasst.

Die nachfolgenden Weiterbildungen beziehen sich auf beide erfindungsgemäßen Vorrichtungen.

Der erste Drehrohrofen ist beispielsweise als ein mit Heißgas durchströmtes und direkt beheiztes rotierendes Rohr ausgebildet. Das Heißgas kann beispielsweise ein Abgas des zweiten Drehrohrofens und/oder ein Heißgasgemisch sein, das aus einem Brüdengas des ersten Drehrohrofen, einem Rauchgas einer Drittanlage, wie einer Müllverbrennungsanlage oder einer Zementanlage oder eines Kraftwerks, und/oder einem Rauchgas aus einer Verbrennung eines Brennstoff-/Luftgemisches gebildet ist.

Der zweite Drehrohrofen ist beispielsweise als ein mit Heißgas durchströmtes und direkt beheiztes rotierendes Rohr ausgebildet. Das Heißgas kann beispielsweise ein Heißgasgemisch aus einem Brüdengas oder Pyrolysegas des ersten Drehrohrofens, einem Rauchgas einer Drittanlage, wie einer Müllverbrennungsanlage, und/oder einem Abgas aus einer Verbrennung eines Brennstoff-/Luftgemisches sein oder das Heißgas aus einer Verbrennung von Brennstoff, Verbrennungsluft, Brüden und/oder optional Rauchgas einer Drittanlage sein.

Dabei wird der zu behandelnde Abfallstoff, insbesondere ein organischer Abfallstoff oder ein vorgetrockneter organischer Abfallstoff, im ersten Drehrohrofen im Gegenstrom zu einem Abgas- und/oder Brüdenstrom und/oder zu einem zugehörigen Heißgasstrom geführt. Im zweiten Drehrohrofen kann der bereits im ersten Drehrohrofen thermisch behandelte und im zweiten Drehrohrofen weiter zu behandelnde Abfallstoff, insbesondere dessen Zwischenprodukte, im Gleichstrom oder im Gegenstrom zum zugehörigen Heißgasstrom geführt werden, der insbesondere aus einer Verbrennung von Brennstoff, Verbrennungsluft und/oder Brüden und ggf. unter Zumischung von Rauchgas resultiert.

Der zweite Drehrohrofen dient der weiteren Verbrennung und Oxidation des bereits thermisch behandelten Abfallstoffes, insbesondere des/der Zwischenprodukts/e. Der zweite Drehrohrofen ist eingerichtet, die noch im Abfallstoff vorhandenen restlichen Organik- und Kohlenstofffraktionen in einer zweiten thermischen Behandlung zu verbrennen, insbesondere nach zu verbrennen. Hierzu weist der zweite Drehrohrofen einen entsprechenden Aufbau auf, wobei die jeweilige Vorrichtung eine Steuereinrichtung umfasst, mittels der beispielsweise als Arbeitsparameter eine Drehzahl und damit die Verweilzeit des Abfallstoffes und/oder sein Füllgrad des Abfallstoffes und/oder die Zuführung des jeweiligen Heißgasstroms und/oder der jeweiligen Verbrennung des ersten und/oder zweiten Drehrohrofens entsprechend einstellbar, steuerbar und/oder regelbar sind bzw. ist. Damit kann die mehrstufige thermische Behandlung an den jeweiligen Prozess oder die betreffende thermische Zone in den Drehrohröfen, wie an den jeweiligen Trocknungs-, Pyrolyse- und/oder Verbrennungsprozess, spezifisch angepasst werden. Insbesondere kann der Verbrennungsprozess im zweiten Drehrohrofen unabhängig von dem Trocknungs- und Pyrolyseprozess im ersten Drehrohrofen angepasst, insbesondere gesteuert werden.

Darüber hinaus kann der erste Drehrohrofen eine insbesondere in den ersten Drehrohrofen hineinragende Brüdenabsaugeinrichtung und/oder Pyrolysegasabsaugeinrichtung umfassen, mittels der ein innerhalb der Trocknungszone entstehender Brüden beziehungsweise ein Pyrolysegas aus dem ersten Drehrohrofen abführbar und dem zweiten Drehrohrofen zuführbar ist. Zusätzlich kann ein aus dem ersten Drehrohrofen austretender Brüden oder ein Pyrolysegas direkt, d.h. ohne Sondenabsaugung, dem zweiten Drehrohrofen, dem Heißgaserzeuger oder einer Brennkammer zugeführt werden. Der Brüden oder das Pyrolysegas wird dabei dem zweiten Drehrohrofen im Gleichstrom oder Gegenstrom zum Abfallstoffstrom zugeführt.

Gemäß einer weiteren Ausführungsform ist ein aus dem ersten Drehrohrofen austretender Brüdenstrom und/oder Brüden und/oder Pyrolysegas und/oder ein aus dem zweiten Drehrohrofen austretendes Abgas und/oder der aus dem ersten Drehrohrofen abgeführte thermisch behandelte Abfallstoff einer Analyseeinrichtung zuführbar. Dabei ist die Analyseeinrichtung signaltechnisch mit einer Steuereinrichtung zur Einstellung, Steuerung und/oder Regelung von Arbeitsparametern der ersten und/oder zweiten thermischen Behandlungsstufe gekoppelt. Beispielsweise sind als Arbeitsparameter eine Drehzahl des ersten Drehrohrofens und/oder des zweiten Drehrohrofens, die insbesondere mit der jeweiligen Verweilzeit des Abfallstoffes einhergeht, und/oder ein Massenstrom des zugeführten Heißgases im zweiten Drehrohrofen einstellbar und/oder ein Massenstrom an zugeführten Abfallstoff im ersten Drehrohrofen und/oder ein Verbrennungsluftmassenstrom und/oder Brennstoffmassenstrom, insbesondere steuer- und/oder regelbar. Zusätzlich kann eine Rauchgasreinigungseinrichtung zur Reinigung eines aus dem ersten Drehrohrofen und/oder aus dem Trockner austretenden Rauchgases vorgesehen sein.

Insbesondere kann die mehrstufige thermische Behandlung, zum Beispiel der Ausbrand des Abfallstoffes und/oder Brüden und/oder ein Pyrolysegas, im zweiten Drehrohrofen durch zusätzliche Zuführung von Verbrennungsluft, Rauchgas, zurückgeführten Brüden und/oder externen Brennstoff optimiert, beispielsweise derart eingestellt werden, dass eine dabei entstandene Asche oder Schlacke einen Gesamtkohlenstoffanteil (auch kurz TOC-Wert (englisch: Total Organic Carbon) genannt) von maximal drei Masse-% aufweist.

Ausführungsbeispiele der Erfindung werden im Folgenden anhand von Zeichnungen näher erläutert.

### Darin zeigen:

- Figur 1: schematisch eine erste Ausführungsform einer Vorrichtung zur mehrfachen thermischen Behandlung eines organischen Abfallstoffes, umfassend zwei strömungstechnisch miteinander gekoppelte Drehrohröfen, und
- Figur 2: schematisch eine zweite Ausführungsform einer Vorrichtung zur mehrfachen thermischen Behandlung eines organischen Abfallstoffes, umfassend zwei strömungstechnisch miteinander gekoppelte Drehrohröfen, wobei ein zusätzlicher Trockner zum Vortrocknen des organischen Abfallstoffes vorgesehen ist.

Einander entsprechende Teile sind in allen Figuren mit den gleichen Bezugszeichen versehen.

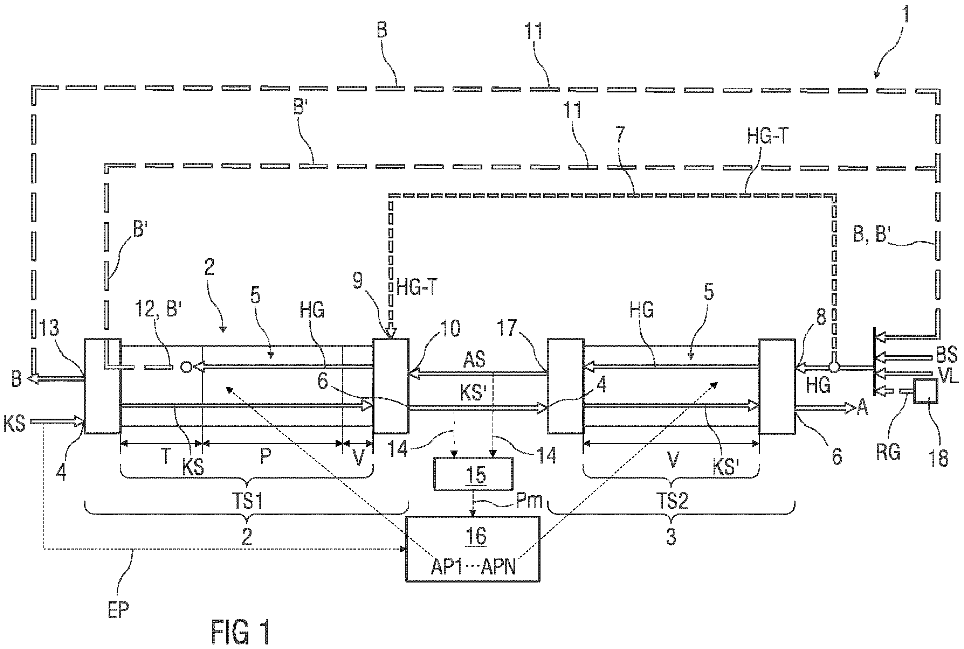

Die **Figur 1** zeigt schematisch ein Ausführungsbeispiel für eine erfindungsgemäße Vorrichtung 1 zur mehrfachen, insbesondere mehrstufigen thermischen Behandlung eines organischen Abfallstoffes KS, insbesondere eines Roh- oder Klärschlamms oder eines Schlammwassers.

Die Vorrichtung 1 umfasst zwei Drehrohröfen 2, 3, die strömungstechnisch miteinander gekoppelt sind.

Der erste Drehrohrofen 2 umfasst zumindest einen Materialeinlass 4 zum Zuführen des organischen Abfallstoffes KS, ein beheizbares Rohr 5 zur ersten thermischen Behandlung des zugeführten organischen Abfallstoffes KS in einer ersten thermischen Stufe TS1 und zumindest einen Materialauslass 6 zum Abführen des thermisch behandelten Abfallstoffes KS', insbesondere eines oder mehrerer Zwischenprodukts/e. Das Rohr 5 ist direkt beheizt und rotiert. Hierzu wird dem Rohr 5 ein Heißgasstrom HG zugeführt, der das Rohr 5 durchströmt. Das Rohr 5 stellt im Betrieb des ersten Drehrohrofens 2 ein beheiztes Rohr 5 dar.

Der Heißgasstrom HG des ersten Drehrohrofens 2 ist beispielsweise durch einen aus dem zweiten Drehrohrofen 3 austretenden Abgasstrom AS und/oder einen optionalen Heißgas-Teilstrom HG-T gebildet, der von einem dem zweiten Drehrohrofen 3 zugeführten Heißgasstrom HG abgezweigt wird.

Der zweite Drehrohrofen 3 umfasst zumindest einen zugehörigen Materialeinlass 4 zum Zuführen des aus dem Materialauslass 6 des ersten Drehrohrofens 2 abgeführten thermisch behandelten Abfallstoffes KS', ein weiteres beheizbares Rohr 5 zur zweiten thermischen Behandlung des thermisch behandelten Abfallstoffes KS' in einer zweiten thermischen Stufe TS2 und mindestens einen zugehörigen Materialauslass 6 zum Abführen einer aus der mehrfachen thermischen Behandlung des Abfallstoffes KS gewonnenen Asche A. Das Rohr 5 des zweiten Drehrohrofens 3 ist ebenfalls direkt beheizt durch Zuführung eines Heißgasstromes HG und rotiert, wobei der Heißgasstrom HG das Rohr 5 durchströmt. Das weitere Rohr 5 stellt im Betrieb des zweiten Drehrohrofens 2 ein weiteres beheiztes Rohr 5 dar.

Der dem zweiten Drehrohrofen 3 zugeführte Heißgasstrom HG kann beispielsweise durch einen aus dem ersten Drehrohrofen 2 abgesaugten Brüdenstrom B' oder ein abgesaugtes Pyrolysegas, einen Rauchgasstrom RG einer Drittanlage 18, wie einer Müllverbrennungsanlage, und/oder einen aus einer Verbrennung von Brennstoff BS oder Brüden B und Verbrennungsluft VL resultierenden Gasstrom gebildet sein. Dabei können der aus der Trocknungszone T abgesaugte Brüdenstrom B', das abgesaugte Pyrolysegas, der am Brüdenauslass 13 austretende Brüden B, der Rauchgasstrom RG der Drittanlage 18, der Brennstoff BS und/oder die Verbrennungsluft VL in den zweiten Drehrohrofen 3 zusammen oder getrennt voneinander eingedüst und verbrannt werden, um den Heißgasstrom HG zu erzeugen. Darüber hinaus kann der aus dem ersten Drehrohrofen 2 ausgetretene Brüden B optional direkt dem zweiten Drehrohrofen 3 zugeführt werden.

Beispielsweise kann der Heißgasstrom HG des zweiten Drehrohrofen 3 aus einer Verbrennung von Brennstoff BS und/oder über eine Brüdenabsaugeinrichtung 12 abgesaugten Brüdenstrom B' und/oder über den Brüdenauslass 13 ausgetragenen Brüden B zusammen mit Verbrennungsluft VL und ggf. unter Zumischung von Rauchgasstrom RG erzeugt werden.

Der jeweils erzeugte Heißgasstrom HG kann sowohl dem ersten Drehrohrofen 2 über eine optionale Heißgasleitung 7 und über den Heißgaseinlass 9 als auch dem zweiten Drehrohrofen 3 über den Heißgaseinlass 8 im Gegenstrom zugeführt werden. Unter Gegenstrom wird dabei verstanden, dass der jeweils erzeugte Heißgasstrom HG sowohl den ersten Drehrohrofen 2 als auch den zweiten Drehrohrofen 3 gegensinnig und somit im Gegenstrom zum Strom des organischen Abfallstoffes KS bzw. des thermisch behandelten Abfallstoffes KS' durchströmt.

Alternativ kann der erzeugte Heißgasstrom HG dem zweiten Drehrohrofen 3 derart zugeführt werden, dass dieser gleichsinnig und somit im Gleichstrom zum Strom des thermisch behandelten Abfallstoffs KS' den zweiten Drehrohrofen 3 durchströmt.

Im zweiten Drehrohrofen 3, insbesondere in dessen beheiztem Rohr 5, kann der bereits im ersten Drehrohrofen 2 thermisch behandelte Abfallstoff KS', insbesondere dessen Zwischenprodukte, weiter thermisch behandelt werden. Dabei kann der bereits thermisch behandelte Abfallstoff KS' im zweiten Drehrohrofen 3 im Gegenstrom oder im Gleichstrom zum zugeführten Heißgasstrom HG geführt werden.

Der organische Abfallstoff KS wird mittels der Vorrichtung 1 mehrfach oder mehrstufig thermisch behandelt.

Im ersten Drehrohrofen 2 erfolgt in der ersten thermischen Stufe TS1 zunächst eine Trocknung in einer Trocknungszone T und nachfolgend eine Pyrolyse in einer Pyrolysezone P unter jeweils reduzierenden Bedingungen und eine teilweise Verbrennung in einer Verbrennungszone V unter oxidierenden Bedingungen des zugeführten organischen Abfallstoffes KS im ersten beheizten Rohr 5.

Die erste thermische Behandlung des organischen Abfallstoffes KS im ersten Drehrohrofen 2 erfolgt in einem Temperaturbereich von 100°C bis 1.500°C, bevorzugt bis 1.000°C, welche einen Arbeits-/Betriebstemperaturbereich des ersten Drehrohrofens 2 darstellt. Dabei wird der organische Abfallstoff KS mit einer Materialtemperatur aufgegeben, die ungefähr der Umgebungstemperatur (im Frühjahr beispielsweise von ca. 15°C, im Sommer von beispielsweise 20°C bis 30°C, im Winter zum Beispiel von ca. 5°C) entspricht. Insbesondere wird der organische Abfallstoff KS unbehandelt aufgegeben. Mit anderen Worten: Der organische Abfallstoff KS, wie zum Beispiel Klärschlamm, wird nicht thermisch vorbehandelt und auch nicht vorentwässert.

Während der ersten thermischen Behandlung im ersten Drehrohrofen 2 durchströmt der zu behandelnde organische Abfallstoff KS verschiedene Behandlungszonen: Trocknungszone T, Pyrolysezone P und Verbrennungszone V. In der Trocknungszone T erfolgt eine Trocknung des aufgegebenen organischen Abfallstoffes KS. In der Pyrolysezone P wird der getrocknete organische Abfallstoff KS pyrolisiert und somit weiter entgast und/oder verschwelt, und in der anschließenden Verbrennungszone V verbrannt zum thermisch behandelten Abfallstoff KS', zum Beispiel in Form einer trockenen Schlammasche.

Die erste thermische Behandlung des organischen Abfallstoffes KS wird insbesondere so individuell eingestellt, zum Beispiel gesteuert und/oder geregelt, dass der thermisch behandelte Abfallstoff KS' am Austritt, insbesondere Materialauslass 6, des ersten Drehrohrofens 2 eine Materialtemperatur in einem Bereich zwischen 900°C und 1.000°C aufweist.

Am Ausgang des ersten Drehrohrofen 2, dem zugehörigen Materialauslass 6, wird der thermisch behandelte Abfallstoff KS' abgeführt und dem zweiten Drehrohrofen 3 am zugehörigen Materialeinlass 4 zugeführt. Der abgeführte und thermisch behandelte Abfallstoff KS' ist ein Zwischenprodukt, das zum Beispiel folgende Eigenschaften aufweist:
- einen organischen Masseanteil, insbesondere einen Gesamtkohlenstoffanteil, von größer drei Masse-% (TOC-Gehalt).

Bei Klärschlamm als organischer Abfallstoff KS tritt zum Beispiel am ersten Drehrohrofen 2 trockene Klärschlammasche mit einem TOC-Gehalt von größer drei Masse-% aus.

Während der zweiten thermischen Behandlung im zweiten Drehrohrofen 3 durchströmt der thermisch behandelte Abfallstoff KS' die zugehörige Verbrennungszone V.

Im zweiten Drehrohrofen 3 erfolgt in der zweiten thermischen Stufe TS2 in der Verbrennungszone V unter oxidierenden Bedingungen eine weitere Oxidation, insbesondere eine weitere Verbrennung, des bereits behandelten Abfallstoffes KS'. Mit anderen Worten: In der Verbrennungszone V wird der thermisch behandelte Abfallstoff KS' nachverbrannt, insbesondere zur Asche A oder Schlacke nachverbrannt. Anschließend wird die daraus resultierende Asche A oder Schlacke und/oder ein Rest- oder Wertstoff über den Materialauslass 6 am zweiten Drehrohrofen 3 abgeführt.

Die zweite thermische Behandlung des organischen Abfallstoffes KS im zweiten Drehrohrofen 3 in der Verbrennungszone V erfolgt bei Temperaturen zwischen circa 900°C und 1.000°C. Die entstandene Asche A oder Schlacke weist zum Beispiel folgende Eigenschaften auf:
- einen organischen Masseanteil, insbesondere einen Gesamtkohlenstoffanteil, von maximal drei Masse-% (TOC-Gehalt).

Bei Klärschlamm als organischer Abfallstoff KS tritt am zweiten Drehrohrofen 3 zum Beispiel eine trockene Klärschlammasche mit einem TOC-Gehalt von ≤ drei Masse-% aus.

Zur Beheizung der Vorrichtung 1 sind mehrere strömungstechnische Kopplungen der beiden Drehrohröfen 2, 3 sowie Verbrennungsluft-, Brennstoff-, Brüden-, Rauchgaszuführungen und Abgasabführungen vorgesehen:
- So wird beispielsweise dem zweiten Drehrohrofen 3 der Heißgasstrom HG über den Heißgaseinlass 8 zugeführt. Der Heißgasstrom HG ist aus einer Verbrennung von Brennstoff BS und/oder Brüdenstrom B' und/oder Brüden B und/oder Pyrolysegas mit Verbrennungsluft VL und ggf. durch Zumischung von Rauchgasstrom RG gebildet.
- Der aus dem zweiten Drehrohrofen 3, insbesondere einem Abgasauslass 17, austretende Abgasstrom AS kann direkt dem ersten Drehrohrofen 2 über einen Einlass, insbesondere einen Abgaseinlass 10, zugeführt werden.
- Ebenso kann über den Heißgaseinlass 9 der über die Heißgasleitung 7 geführte und abgezweigte Heißgas-Teil strom HG-T dem ersten Drehrohrofen 2 zugeführt werden.
- Ein Teil des aus dem ersten Drehrohrofen 2 über den Brüdenauslass 13 austretenden Brüden B und/oder ein Pyrolysegas kann über die optionale Brüdenleitung 11 direkt dem zweiten Drehrohrofen 3 zugeführt werden. Dabei fungiert der Brüden B beziehungsweise das Pyrolysegas als Heizgas für den zweiten Drehrohrofen 3, das mit Verbrennungsluft VL und/oder zugeführten Brennstoff BS und/oder Rauchgasstrom RG zu dem Heißgasstrom HG verbrennt und über den Heißgaseinlass 8 dem zweiten Drehrohrofen 3 und/oder teilweise über die optionale Heißgasleitung 7 dem ersten Drehrohrofen 2 über dessen Heißgaseinlass 9 zugeführt wird.
- Alternativ kann der Brüdenstrom B' mithilfe der Brüdenabsaugeinrichtung 12 bereits innerhalb der Trocknungszone T aus dem ersten Drehrohrofen 2 abgesaugt werden und in die optionale Brüdenleitung 11 für den zweiten Drehrohrofen 3 und/oder die optionale Heißgasleitung 7 für den ersten Drehrohrofen 2 eingespeist werden. Die Absaugung innerhalb der Trocknungszone T hat den Vorteil, dass der aus dieser Trocknungszone T abgesaugte Brüdenstrom B' im Vergleich zum am Brüdenauslass 13 ausgetretenen Brüden B einen geringeren Wasserdampfanteil und damit einen höheren Heizwert aufweist.

Der zweite Drehrohrofen 3 ist eingerichtet, den thermisch behandelten Abfallstoff KS' in der zweiten thermischen Stufe TS2 zu Asche A oder Schlacke und/oder einem Rest- oder Wertstoff zu verbrennen, die beziehungsweise der über den Materialauslass 6 aus dem zweiten Drehrohrofen 3 abgeführt wird.

Zur individuellen Einstellung der mehrstufigen thermischen Behandlung des organischen Abfallstoffes KS kann eine Abgasanalyse des aus dem ersten Drehrohrofen 2 ausströmenden Brüdenstroms B' und/oder Brüden B und/oder des Pyrolysegases und/oder des aus dem zweiten Drehrohrofen 3 ausströmenden Abgasstroms AS und/oder abgeführten thermisch behandelten Abfallstoffs KS' und/oder der Asche A und/oder des Rest- oder Wertstoffes durchgeführt werden. Dazu kann beispielsweise eine Abgasprobe aus dem jeweiligen Materialstrom, wie zum Beispiel dem Abgasstrom AS des zweiten Drehrohrofens 3 entnommen und über eine Zuleitung 14 einer Analyseeinrichtung 15, insbesondere einer Gasanalyseeinrichtung, zugeführt werden. Zusätzlich kann eine Temperatur, insbesondere eine Materialtemperatur, vom aus dem ersten Drehrohrofen 2 abgeführten thermisch behandelten Abfallstoff KS' und/oder der aus dem zweiten Drehrohrofen 3 abgeführten Asche A ermittelt und der Analyseeinrichtung 15 zugeführt werden.

Dabei wird oder werden anhand mindestens eines mittels einer Analyse, insbesondere einer Material- und/oder Gas-, zum Beispiel Abgasanalyse, ermittelten Parameters Pm, wie zum Beispiel einer Abgaszusammensetzung, eines Abgasmassenstroms, einer Abgastemperatur, einer Stoffkonzentration, insbesondere einer Sauerstoff-Konzentration, einer Materialtemperatur, wie der Materialtemperatur des thermisch behandelten Abfallstoffes KS' oder der Asche A oder des Rest-oder Wertstoffes, ein oder mehrere Arbeitsparameter AP1 bis APn der ersten thermischen Behandlung und/oder des ersten Drehrohrofens 2 und/oder der zweiten thermischen Behandlung und/oder des zweiten Drehrohrofens 3 ermittelt und diese thermischen Prozesse und/oder die Drehrohröfen 2, 3 entsprechend eingestellt, gesteuert und/oder geregelt.

Beispielsweise wird oder werden als Arbeitsparameter APn die Drehzahl der Drehrohröfen 2 und/oder 3, ein Massenstrom an Fremdenergie, wie Rauchgaszufuhr, Brennstoffzufuhr, Brüdenzufuhr, Arbeitstemperatur im jeweiligen Drehrohrofen 2, 3, ein Abfallstoffmassenstrom, ein Abgasmassenstrom, ein Brüdenmassenstrom, ein Pyrolysegasmassenstrom, ein Verbrennungsluftmassenstrom, ein Brennstoffmassenstrom, entsprechend eingestellt, gesteuert und/oder geregelt.

Zur Steuerung der Arbeitsparameter APn der Drehrohröfen 2, 3 ist die Analyseeinrichtung 15 mit einer Steuereinrichtung 16 signaltechnisch gekoppelt. Dabei werden die mittels der Analyseeinrichtung 15 ermittelten Parameter Pm der Steuereinrichtung 16 zur weiteren Verarbeitung und Erzeugung der Arbeitsparameter APn zur Einstellung der thermischen Behandlungsprozesse der Drehrohröfen 2, 3, insbesondere zur Einstellung der Behandlungszonen, wie Trocknungszone T, Pyrolysezone P und/oder Verbrennungszone V, zugeführt.

Zusätzlich oder alternativ können weitere Eingangsparameter EP, zum Beispiel Feuchte des zugeführten organischen Abfallstoffes, Organikgehalt des oder der Zwischenprodukts/e, erfasst und bei der Steuerung der mehrstufigen thermischen Behandlung berücksichtigt werden. Hierzu können die Eingangsparameter EP der Analyseeinrichtung 15 und/oder der Steuereinrichtung 16 direkt und/oder indirekt zugeführt werden. Hierdurch kann die mehrstufige thermische Behandlung auf sich ändernde Eigenschaften des eingangs zugeführten, insbesondere unbehandelten organischen Abfallstoffes KS, wie zum Beispiel Roh- oder Klärschlamm, entsprechend eingestellt, gesteuert und/oder geregelt werden.

Mittels der Steuereinrichtung 16 kann beispielsweise eine Drehzahl und damit die Verweilzeit des Abfallstoffes KS, KS' und/oder sein Füllgrad, am jeweiligen Drehrohrofen 2 und/oder 3 entsprechend eingestellt, gesteuert und/oder geregelt werden. Damit kann die mehrstufige thermische Behandlung an den jeweiligen Prozess in den Drehrohröfen 2 und 3, insbesondere an den jeweiligen Trocknungs-, Pyrolyse- und/oder Verbrennungsprozess in der jeweiligen thermischen Stufe TS1 und/oder TS2, spezifisch angepasst werden. Insbesondere kann der Verbrennungsprozess im zweiten Drehrohrofen 3 unabhängig von dem Trocknungs-, Pyrolyse- und teilweise Verbrennungsprozess im ersten Drehrohrofen 2 angepasst, insbesondere gesteuert werden.

Darüber hinaus kann der thermische Behandlungsprozess in der Vorrichtung 1, insbesondere die jeweiligen thermischen Behandlungszonen in den Drehrohröfen 2, 3, derart eingestellt werden, dass die dabei entstandene und am Materialauslass 6 des zweiten Drehrohrofen 3 austretende Asche A oder Schlacke oder des Rest- oder Wertstoffes einen Gesamtkohlenstoffanteil (auch kurz TOC-Wert (englisch: Total Organic Carbon) genannt) von maximal drei Masse-% aufweist. Beispielsweise kann die mehrstufige thermische Behandlung, insbesondere der Ausbrand des thermisch behandelten Abfallstoffes KS' im zweiten Drehrohrofen 3 durch die Zuführung des Heißgasstromes HG, der aus der Verbrennung von zurückgeführten Brüden B oder Brüdenstrom B' oder des Pyrolysegases, und/oder von Brennstoff BS mit Verbrennungsluft VL und/oder zugeführtem Rauchgasstrom RG gebildet ist, so optimiert werden, , um einen möglichst niedrigen Gesamtkohlenstoffanteil von weniger als drei Masse-%, insbesondere von weniger als zwei Masse-% zu erzielen.

Die Vorrichtung 1 ist zur Erzeugung des Heißgasstromes HG als Drittanlage 18 vorzugsweise mit einer Müllverbrennungsanlage gekoppelt. Dabei wird von der Müllverbrennungsanlage der Rauchgasstrom RG abgezweigt und zur Beheizung der Vorrichtung 1 verwendet. Der in der Vorrichtung 1 entstehende Brüden B, der insbesondere aus Wasser und Organik besteht, welche aus verdampften volatilen Fraktionen gebildet werden, wird zumindest in Teilen, welche nicht in der Vorrichtung 1 zur Beheizung des zweiten Drehrohrofens 3 genutzt werden, in die Müllverbrennungsanlage geführt. Die im Brüden B enthaltenen organischen Bestandteile verbrennen in der Müllverbrennungsanlage und enthaltene Schadstoffe werden durch eine Rauchgasreinigung der Müllverbrennung gereinigt.

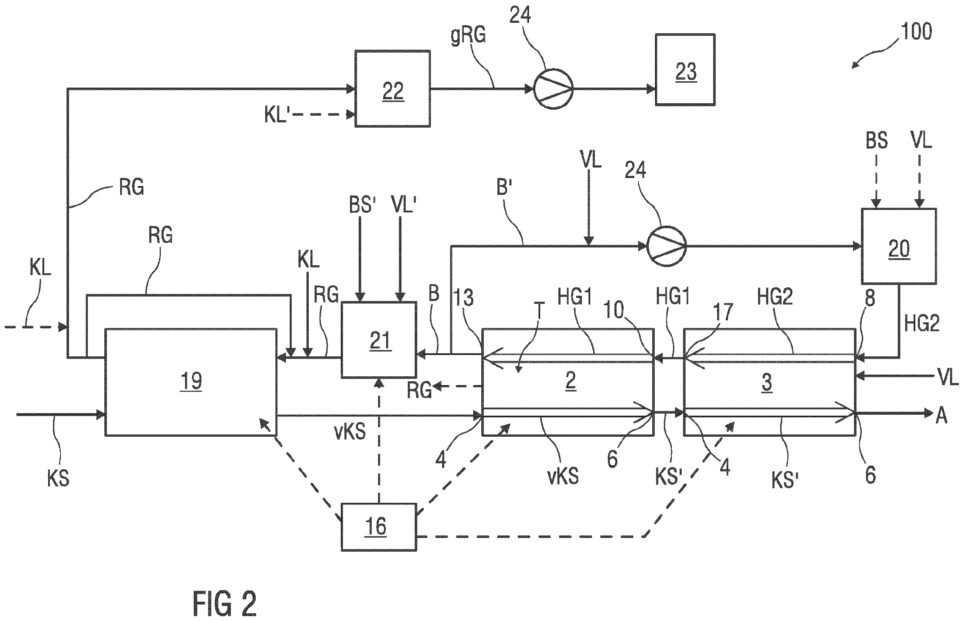

Die **Figur 2** zeigt schematisch eine weitere Ausführungsform mit einer Vorrichtung 100 zur mehrfachen thermischen Behandlung eines organischen Abfallstoffes KS, umfassend zwei strömungstechnisch miteinander gekoppelte Drehrohröfen 2, 3, wobei ein zusätzlicher Trockner 19 zum Vortrocknen des organischen Abfallstoffes KS vorgesehen ist. Diese Vorrichtung 100 ist insbesondere dann vorgesehen, wenn keine Drittanlage 18, wie eine Müllverbrennungsanlage, zur Verbrennung des Brüdens B und zur Erzeugung des Heißgasstroms HG zur Verfügung steht.

In diesem Fall wird der Brüden B in der Vorrichtung 100 selbst verbrannt, wie dies nachfolgend näher beschrieben wird.

Die Drehrohröfen 2 und 3 sind in Figur 2 schematisch dargestellt und entsprechen den Drehrohröfen 2 und 3 der Figur 1. Um Wiederholungen zu vermeiden, wird auf die Beschreibung zur Figur 1 verwiesen.

Der Unterschied der Vorrichtungen 1 und 100 liegt unter anderem darin, dass zum einen dem ersten Drehrohrofen 2 der Vorrichtung 100 ein im Trockner 19 vorgetrockneter organischer Abfallstoff vKS zugeführt wird. Zum anderen die Vorrichtung 100 zusätzlich einen Heißgaserzeuger 20 zur Inbetriebnahme der Vorrichtung 100 und zur Erzeugung des Heißgasstroms HG umfasst.

Dabei ist der Heißgaserzeuger 20 zur Erzeugung des Heißgasstroms HG zur Beheizung der Drehrohröfen 2, 3 vorgesehen. Der Heißgaserzeuger 20 ist als eine Hybridanlage ausgebildet, welche mittels des Brüdens B', des Pyrolysegases und/oder mittels eines Brennstoffs BS betrieben wird. Somit dient der Heißgaserzeuger 20 im Normalbetrieb vor allem der energetischen Nutzung der erzeugten Brüden B' und/oder des Pyrolysegases.

Im Normalbetrieb kann die Vorrichtung 100 insbesondere autotherm und ohne Zuführung von Primärenergie betrieben werden. Das heißt, im Normalbetrieb wird der Heißgaserzeuger 20 nur mittels des Brüdens B' und/oder des Pyrolysegases betrieben. Lediglich während des Anfahrvorgangs der Vorrichtung 100 wird zusätzliche Primärenergie, wie Brennstoff BS, zum Betreiben des Heißgaserzeugers 20 benötigt.

Nachfolgend wird der Aufbau der Vorrichtung 100 und deren Betrieb näher beschrieben:
Der Trockner 19 ist zum Vortrocknen des organischen Abfallstoffes KS, insbesondere eines feuchten Materials, vorgesehen.

Der Trockner 19 ist durch Verbrennung mittels zumindest eines Teils des bei der thermischen Behandlung in dem ersten Drehrohrofen 2 entstehenden Brüdens B oder des Pyrolysegases beheizbar. Zur Verbrennung zumindest eines Teils des bei der thermischen Behandlung in dem ersten Drehrohrofen 2 entstehenden Brüdens B oder des Pyrolysegases ist eine Brennkammer 21 vorgesehen.

Wird dem ersten Drehrohrofen 2 noch feuchter organischer Abfallstoff KS zugeführt, wie in Figur 1 beschrieben, dann weist der Brüden B oder das Pyrolysegas aus dem ersten Drehrohrofen 2 einen hohen Wassergehalt und einen niedrigen Heizwert auf, so dass bei der Verbrennung des Brüdens B oder des Pyrolysegases in der Brennkammer 21 zur Realisierung der gesetzlich vorgeschriebenen Temperatur von 850°C eine Zufeuerung mit Primärenergie, insbesondere Brennstoff, zum Beispiel Erdgas, erforderlich ist.

Um dies zu vermeiden, schlägt die Erfindung vor, den Heizwert des Brüdens B oder des Pyrolysegases aus dem ersten Drehrohrofen 2 zu erhöhen, indem der organische Abfallstoff KS vor Eintritt in den ersten Drehrohrofen 2 vorgetrocknet wird. Zumindest die Vortrocknung des organischen Abfallstoffs KS im Trockner 19 wird beispielsweise derart mittels der Steuereinrichtung 16 gesteuert, dass der im ersten Drehrohrofen 2 entstehende Brüden B oder das Pyrolysegas einen solchen Heizwert aufweist, dass dieser oder ein Teil dieses Brüdens B oder dieses Pyrolysegases in der Brennkammer 21 ohne Zuführung von Primärenergie, insbesondere Brennstoff, und somit autotherm bei mindestens 850°C verbrennt. Beispielsweise kann durch Zufeuerung von Brennstoff BS in den Heißgaserzeuger 20 der Heizwert des im ersten Drehrohrofen 2 entstehenden Brüdens B auf eine Temperatur in einem Bereich von größer 800°C, insbesondere größer 850°C, zum Beispiel von 900°C oder 950°C, erhöht werden. Zusätzlich kann auch durch direkte Zufeuerung von Brennstoff BS' in die Brennkammer 21 die o.g. Temperaturführung realisiert werden. Diese Zufeuerung von Brennstoff BS in den Heißgaserzeuger 20 und/oder von Brennstoff BS' in die Brennkammer 21, zumindest im Anfahrvorgang der Vorrichtung 100, wird mittels der Steuereinrichtung 16 gesteuert.

Insbesondere kann der Teil des in dem ersten Drehrohrofen 2 entstehenden Brüdens B oder des Pyrolysegases direkt der Brennkammer 21 zugeführt werden.

Im Normalbetrieb der Vorrichtung 100 wird der Heißgaserzeuger 20 zur Erzeugung des Heißgasstroms HG mittels des aus dem ersten Drehrohrofen 2 abgeführten Brüdens B' oder des Pyrolysegases betrieben. Die Vorrichtung 100 wird somit autotherm ohne zusätzliche Primärenergie betrieben.

Während eines Anfahrvorgangs der Vorrichtung 100 wird der Heißgaserzeuger 20 mit zusätzlicher Primärenergie, insbesondere Brennstoff BS, zur Erzeugung des Heißgasstroms HG betrieben. Mit anderen Worten: Die Vorrichtung 100 wird zeitweise, insbesondere für den Anfahrvorgang allotherm betrieben.

Im Normalbetrieb der Vorrichtung 100 wird zumindest der eine Teil des in dem ersten Drehrohrofen 2 entstehenden Brüdens B' oder des Pyrolysegases direkt dem Heißgaserzeuger 20 zugeführt und dient insbesondere der Beheizung der beiden Drehrohröfen 2, 3.

Der restliche Teil des Brüdens B oder des Pyrolysegases gelangt in die Brennkammer 21 (auch Nachbrennkammer genannt) und verbrennt dort im Normalbetrieb autotherm bei Temperaturen von mindestens 850°C.

Der aus der Brennkammer 21 austretende Rauchgasstrom RG wird zur Vortrocknung des organischen Abfallstoffs KS dem Trockner 19 zugeführt. Anschließend wird der Rauchgasstrom RG vom Trockner 19 einer Rauchgasreinigungseinrichtung 22 zur Reinigung, insbesondere zur Filterung der enthaltenen Schadstoffe zugeführt. Anschließend wird ein gereinigter Rauchgasstrom gRG einem Kamin 23 zugeführt. Gegebenenfalls kann der Rauchgasstrom RG durch Zuführung von Kaltluft auf eine Temperatur von kleiner 250°C, insbesondere kleiner 230°C, herunter gekühlt werden (nicht näher dargestellt). Insbesondere wird der Rauchgasstrom RG auf eine Temperatur heruntergekühlt, welche gleich oder kleiner einer Betriebstemperatur eines Gewebefilters der Rauchgasreinigungseinrichtung 22 entspricht.

Die Vorrichtung 100 kann zusätzlich in den Verbindungsleitungen zwischen Drehrohrofen 2, 3 und Heißgaserzeuger 20, Trockner 19 und Rauchgasreinigungseinrichtung 22 und/oder Rauchgasreinigungseinrichtung 22 und Kamin 23 zur Förderung der betreffenden Ströme, zum Beispiel des Heißgasstroms HG, des Rauchgasstroms RG, des gereinigten Rauchgasstroms gRG, des Pyrolysegasstroms und/oder des Brüdenstroms B', mindestens eine Fördereinrichtung 24, insbesondere ein Gebläse oder ähnliche Einrichtungen, aufweisen. Die Fördereinrichtungen 24, wie zum Beispiel Gebläse, werden insbesondere in Bereichen der Verbindungsleitungen eingesetzt, in welchen ein negatives Druckniveau zu überwinden ist. Fördereinrichtungen 24, wie zum Beispiel Gebläse, werden insbesondere in Bereichen der Verbindungsleitungen eingesetzt, in welche der betreffende Strom eine Temperatur von kleiner 350°C, insbesondere von kleiner 250°C, aufweist.

Der vorgetrocknete organische Abfallstoff vKS wird dem ersten Drehrohrofen 2 zugeführt und in einem Gegenstrom zu dem ersten Heißgasstrom HG1 durch den ersten Drehrohrofen 2 geführt. Der erste Heißgasstrom HG1 des ersten Drehrohrofens 2 ist durch den aus dem zweiten Drehrohrofen 3 austretenden Abgasstrom gebildet.

Der thermisch behandelte Abfallstoff KS' wird dann in dem zweiten Drehrohrofen 3 in einem Gleichstrom oder in einem Gegenstrom zu dem zweiten Heißgasstrom HG2 geführt. Der zweite Heißgasstrom HG2 des zweiten Drehrohrofens 3 ist durch den aus dem Heißgaserzeuger 20 austretenden Abgasstrom gebildet.

Vor Eintritt in die Rauchgasreinigungseinrichtung 22 kann der Rauchgasstrom RG nach der Brennkammer 21 und/oder nach dem Trockner 19 mittels Kühlluft KL auf eine entsprechende Temperatur um 220°C heruntergekühlt, damit die Filter des in der Rauchgasreinigung befindlichen Gewebefilters nicht beschädigt werden.

Im Betrieb der Vorrichtung 100 wird als organischer Abfallstoff KS insbesondere ein Klärschlamm, ein Schlammwasser, Klärschlammasche oder ein Asphalt in dem Trockner 19, dem nachfolgenden ersten Drehrohrofen 2 und dem nachfolgenden zweiten Drehrohrofen 3 thermisch behandelt. Dabei wird der organische Abfallstoffes KS zunächst dem Trockner 19 zugeführt. Alternativ kann der organische Abfallstoff KS direkt dem ersten Drehrohrofen 2 zugeführt werden.

Optional wird der organische Abfallstoff KS in dem Trockner 19 vorgetrocknet. Anschließend wird der vorgetrocknete Abfallstoff vKS oder der organische Abfallstoff KS der ersten thermischen Behandlung in dem ersten Drehrohrofen 2 ausgesetzt. Der thermisch behandelte Abfallstoff KS' wird aus dem ersten Drehrohrofen 2 abgeführt und in dem zweiten Drehrohrofen 3 zur zweiten thermischen Behandlung zugeführt und als dabei gewonnener Asche A oder Schlacke oder Rest- oder Wertstoff aus dem zweiten Drehrohrofen 3 abgeführt.

Der vorgetrocknete organische Abfallstoff vKS wird in dem ersten Drehrohrofen 2 während der ersten thermischen Behandlung restgetrocknet und pyrolysiert. Dies erfolgt ohne Luftzufuhr. Während der zweiten thermischen Behandlung wird der thermisch behandelte organische Abfallstoff KS' in dem zweiten Drehrohrofen 2 unter Luftzufuhr, insbesondere Zufuhr von Verbrennungsluft VL verbrannt. Die Vorrichtung 100 zeichnet sich dadurch aus, dass durch die zusätzliche Vortrocknung des organischen Abfallstoffes KS in dem Trockner 19 die Vorrichtung 100 ohne Zuführung von Primärenergie betrieben werden kann. Lediglich zum Anfahren der Vorrichtung 100 ist zeitweise eine Zufuhr von Primärenergie, insbesondere eine Zufuhr von Brennstoff BS in den Heißgaserzeuger 20 erforderlich. Nach dem Anfahren der Vorrichtung 100, insbesondere wenn dem ersten Drehrohrofen 2 genügend Brüden B oder Pyrolysegas mit entsprechend hohem Heizwert entnommen werden kann, ist eine zusätzliche Zufuhr von Brennstoff BS nicht mehr erforderlich. Der Heißgaserzeuger 20 kann im Normalbetrieb der Vorrichtung 100 ausschließlich über den zugeführten Brüden B' oder das Pyrolysegas betrieben werden.

Zur Steuerung dieses geschlossenen Heizungskreislaufs der Vorrichtung 100 im Normalbetrieb ist gegebenenfalls eine Zufuhr von Kühlluft KL, KL' an ein oder mehreren Stellen, zum Beispiel vor dem Trockner 19 und/oder vor der Rauchgasreinigungseinrichtung 22 erforderlich. Im Heißgaserzeuger 20, in der Brennkammer 21 und/oder dem zweiten Drehrohrofen 3 ist eine Zuspeisung von Verbrennungsluft VL, VL' erforderlich. Die Zufuhr der Kühlluft°KL KL'und der Verbrennungsluft VL, VL' wird mittels der Steuereinrichtung 16 entsprechend gesteuert.

### BEZUGSZEICHENLISTE

- 1, 100: Vorrichtung zur mehrfachen thermischen Behandlung eines organischen Abfallstoffes
- 2: Erster Drehrohrofen
- 3: Zweiter Drehrohrofen
- 4: Materialeinlass
- 5: Rohr
- 6: Materialauslass
- 7: Optionale Heißgasleitung
- 8: Heißgaseinlass am zweiten Drehrohrofen 3
- 9: Heißgaseinlass am ersten Drehrohrofen 2
- 10: Abgaseinlass
- 11: Optionale Brüdenleitung
- 12: Brüdenabsaugeinrichtung
- 13: Brüdenauslass
- 14: Zuleitung
- 15: Analyseeinrichtung
- 16: Steuereinrichtung
- 17: Abgasauslass
- 18: Drittanlage
- 19: Trockner
- 20: Heißgaserzeuger
- 21: Brennkammer
- 22: Rauchgasreinigungseinrichtung
- 23: Kamin
- 24: Fördereinrichtung

- A: Asche
- AP1, AP2, APn: Arbeitsparameter
- AS: Abgasstrom
- B: Brüden
- B': Brüdenstrom
- BS: Brennstoff
- BS': Brennstoff Nachbrennkammer
- VL: Verbrennungsluft
- VL': Verbrennungsluft Nachbrennkammer
- RG: Rauchgasstrom
- gRG: gereinigter Rauchgasstrom
- HG: Heißgasstrom
- HG-T: Heißgas-Teilstrom
- EP: Eingangsparameter
- KS: Organischer Abfallstoff
- KS': Thermisch behandelter Abfallstoff
- KL: Kühlluft
- KL': Kühlluft vor Rauchgasreinigung
- T: Trocknungszone
- P: Pyrolysezone
- V: Verbrennungszone
- vKS: vorgetrockneter organischer Abfallstoff
- TS1: Erste thermische Stufe
- TS2: Zweite thermische Stufe
- Pm: Parameter

## Patentansprüche

1. Vorrichtung (1, 100) zur thermischen Behandlung eines organischen Abfallstoffes (KS), insbesondere von Klärschlamm, Schlammwasser, Klärschlammasche oder Asphalt, umfassend zumindest:
- einen ersten Drehrohrofen (2) zur ersten thermischen Behandlung des organischen Abfallstoffes (KS, vKS),
- einen zweiten Drehrohrofen (3) zur zweiten thermischen Behandlung des thermisch behandelten organischen Abfallstoffes (KS'),
wobei der zweite Drehrohrofen (3) mittels zumindest eines Teils eines bei der thermischen Behandlung in dem ersten Drehrohrofen (2) entstehenden Brüdens (B, B') beheizbar ist.

2. Vorrichtung (100) nach Anspruch 1,
wobei ein Trockner (19) zum Vortrocknen des organischen Abfallstoffes (KS) vorgesehen ist.

3. Vorrichtung (100) nach Anspruch 2,
wobei der Trockner (19) mittels zumindest eines Teils eines bei der thermischen Behandlung in dem ersten Drehrohrofen (2) entstehenden Brüdens (B) oder eines Pyrolysegases, der beziehungsweise das in einer Brennkammer (21) verbrannt wird, beheizbar ist.

4. Vorrichtung (1, 100) nach einem der vorhergehenden Ansprüche,
wobei der erste Drehrohrofen (2) mittels eines bei der thermischen Behandlung in dem zweiten Drehrohrofen (3) entstehenden Abgasstromes (AS) beheizbar ist.

5. Vorrichtung (100) nach einem der vorhergehenden Ansprüche, wobei eine Brennkammer (21) zur Verbrennung zumindest eines der Teile des bei der thermischen Behandlung in dem ersten Drehrohrofen (2) entstehenden Brüdens (B) oder des Pyrolysegases vorgesehen ist.

6. Vorrichtung (100) nach Anspruch 5, wobei der zumindest eine Teil des in dem ersten Drehrohrofen (2) entstehenden Brüdens (B) oder des Pyrolysegases direkt der Brennkammer (21) zuführbar ist.

7. Vorrichtung (1, 100) nach Anspruch 5 oder 6, wobei eine Steuereinheit (16) vorgesehen und derart eingerichtet ist, dass der zumindest eine Teil des Brüdens (B) oder des Pyrolysegases in der Brennkammer (21) bei mindestens 850°C verbrennt.

8. Vorrichtung (1, 100) nach einem der vorhergehenden Ansprüche, wobei ein Heißgaserzeuger (20) zur Erzeugung eines Heißgasstroms (HG2) für den zweiten Drehrohrofen (3) vorgesehen ist.

9. Vorrichtung (1, 100) nach Anspruch 8, wobei zumindest der eine Teil des in dem ersten Drehrohrofen (2) entstehenden Brüdens (B) oder des Pyrolysegases direkt dem Heißgaserzeuger (20) zuführbar ist.

10. Vorrichtung (1, 100) nach Anspruch 8 oder 9, wobei dem Heißgaserzeuger (20) während eines Anfahrvorgangs der Vorrichtung (1, 100) zusätzlich Brennstoff (BS) zuführbar ist.

11. Vorrichtung (1, 100) nach einem der vorhergehenden Ansprüche 1 bis 10 oder nach einem der vorhergehenden Ansprüche 2 bis 10, wobei der organische Abfallstoff (KS) oder ein vorgetrockneter organischer Abfallstoff (vKS) in dem ersten Drehrohrofen (2) in einem Gegenstrom zu einem ersten Heißgasstrom (HG1) führbar oder geführt ist und der thermisch behandelte Abfallstoff (KS') in dem zweiten Drehrohrofen (3) in einem Gleichstrom oder in einem Gegenstrom zu einem zweiten Heißgasstrom (HG2) führbar oder geführt ist.

12. Vorrichtung (1,) nach einem der vorhergehenden Ansprüche, wobei der erste Drehrohrofen (2) eine Brüdenabsaugeinrichtung (12) umfasst, mittels der ein entstehender Brüdenstrom (B') aus der Trocknungszone (T) aus dem ersten Drehrohrofen (2) abführbar und dem zweiten Drehrohrofen (3) zuführbar ist.

13. Vorrichtung (100) nach einem der vorhergehenden Ansprüche 1 bis 12 oder nach einem der vorgehenden Ansprüche 2 bis 12, wobei eine Rauchgasreinigungseinrichtung (22) zur Reinigung eines aus der Brennkammer (21) und/oder aus dem Trockner (19) austretenden Rauchgasstroms (RG) vorgesehen ist.

14. Verfahren zur thermischen Behandlung eines organischen Abfallstoffes (KS), insbesondere von Klärschlamm, Schlammwasser, Klärschlammasche oder Asphalt, in einer Vorrichtung (1, 100) nach einem der vorhergehenden Ansprüche mit einem ersten Drehrohrofen (2) und einem nachfolgenden zweiten Drehrohrofen (3), umfassend folgende Schritte:
- Zuführen des organischen Abfallstoffes (KS) in einen Trockner (19) und/oder in den ersten Drehrohrofen (2),
- optional Vortrocknen des organischen Abfallstoffes (KS) in dem Trockner (19),
- erste thermische Behandlung des organischen Abfallstoffes (KS) und/oder des vorgetrockneten organischen Abfallstoffes (vKS) in dem ersten Drehrohrofen (2) und Abführen eines thermisch behandelten Abfallstoffes (KS'),
- Zuführen des thermisch behandelten Abfallstoffes (KS') in den zweiten Drehrohrofen (3),
- zweite thermische Behandlung des thermisch behandelten Abfallstoffes (KS') in dem zweiten Drehrohrofen (3), und
- Abführen einer dabei gewonnenen Asche (A) oder Schlacke oder eines Rest-oder Wertstoffs aus dem zweiten Drehrohrofen (3).

15. Verfahren nach Anspruch 14,
wobei der vorgetrocknete organische Abfallstoff (vKS) in dem ersten Drehrohrofen (2) während der ersten thermischen Behandlung restgetrocknet und pyrolysiert wird.

16. Verfahren nach Anspruch 14 oder 15, wobei der thermisch behandelte organische Abfallstoff (KS') in dem zweiten Drehrohrofen (2) während der zweiten thermischen Behandlung verbrannt wird.

17. Verfahren nach einem der vorhergehenden Ansprüche 14 bis 16, wobei ein während der ersten thermischen Behandlung entstehender Brüden (B) teilweise einer Brennkammer (21) und/oder teilweise einem Heißgaserzeuger (20) als Heizgas zugeführt wird.

18. Verfahren nach Anspruch 17, wobei der Brüden (B) in der Brennkammer (21) bei mindestens 850°C verbrannt wird.
